## Europäisches Patentamt
## European Patent Office
## Office européen des brevets

(11) Veröffentlichungsnummer: **0 331 054 B1**

(12) # EUROPÄISCHE PATENTSCHRIFT

(45) Veröffentlichungstag der Patentschrift: **10.08.94**

(51) Int. Cl.5: **C01G 49/06**, G11B 5/706

(21) Anmeldenummer: **89103330.0**

(22) Anmeldetag: **25.02.89**

(54) **Verfahren zur Herstellung von nadelförmigem alpha-Eisen-III-oxid.**

(30) Priorität: **04.03.88 DE 3807042**

(43) Veröffentlichungstag der Anmeldung:
**06.09.89 Patentblatt 89/36**

(45) Bekanntmachung des Hinweises auf die
Patenterteilung:
**10.08.94 Patentblatt 94/32**

(84) Benannte Vertragsstaaten:
**DE FR GB NL**

(56) Entgegenhaltungen:
**EP-A- 0 237 943**
**EP-A- 0 237 944**
**EP-A- 0 256 459**
**DE-A- 2 849 173**

**PATENT ABSTRACTS OF JAPAN, Band 12,
Nr. 270 (C-515)[3117], 27. Juli 1988; & JP-A-63
50 326**

(73) Patentinhaber: **BASF Aktiengesellschaft
Carl-Bosch-Strasse 38
D-67063 Ludwigshafen(DE)**

(72) Erfinder: **Arndt, Volker, Dr.
Koenigsberger Strasse 1
D-6712 Bobenheim-Roxheim(DE)**
Erfinder: **Auweter, Helmut, Dr.
Lessingstrasse 35
D-6703 Limburgerhof(DE)**
Erfinder: **Feser, Rainer, Dr.
Colgensteiner Weg 25
D-6718 Gruenstadt(DE)**
Erfinder: **Schwab, Ekkehard, Dr.
Berwartsteinstrasse 4
D-6730 Neustadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von feinteiligem, dendriten- und porenfreiem $\alpha$-$Fe_2O_3$ aus Eisen(III)-Salzen in Gegenwart von mit Eisen(III)-Ionen komplexbildenden Substanzen in alkalischer Suspension bei Temperaturen zwischen 80 und 250°C sowie dessen Verwendung zur Herstellung von für magnetische Aufzeichnungsträger geeigneten magnetischen Materialien.

Um die für moderne magnetische Aufzeichnungsträger geforderten, hohen Ansprüche an die verwendeten magnetischen Teilchen zu erfüllen, wurden in der letzten Zeit Anstrengungen unternommen, die kristallographischen Eigenschaften dieser Teilchen zu verbessern. Unerwünscht sind speziell feine Löcher, Poren und Hohlräume, da hierdurch die magnetischen Eigenschaften verschlechtert werden, sowie besonders auch die Bildung von Dendriten, da sie das erforderliche gleichmäßige Ausrichten der Teilchen auf dem Aufzeichnungsmedium erschweren oder verhindern und die Packungsdichte erniedrigen.

Als Ausgangsmaterial zur Darstellung von nadelförmigen, magnetischen Teilchen wird im allgemeinen nadelförmiges $\alpha$-$Fe_2O_3$ verwendet. Dieses wird üblicherweise durch Entwässerung von nadelförmigen $\alpha$-FeOOH oder $\gamma$-FeOOH erhalten. Bei diesem Prozeß kommt es zur Ausbildung der oben beschriebenen Nachteile wie Poren, Löcher und Dendriten.

Verfahren zur Darstellung von verbessertem $\alpha$-$Fe_2O_3$ weitgehend ohne die genannten Nachteile werden in der DE-A 28 49 173 und DE-A 31 46 982 beschrieben. Danach erfolgt die direkte Synthese von nadelförmigem $\alpha$-$Fe_2O_3$ aus $Fe(OH)_3$ in alkalischer Suspension in Gegenwart von Wachstumsregulierungsmitteln. Außerdem war bekannt, daß sich durch eine Erhöhung der Feinteiligkeit der für die Herstellung von magnetischen Aufzeichnungsträgern eingesetzten magnetischen Materialien das Partikelrauschen des fertigen Aufzeichnungsträgers verringern läßt. Mit der Erhöhung der Feinteiligkeit, entsprechend einer Verringerung des Teilchenvolumens, läßt sich durch Senken des Rauschens die nutzbare Dynamik des magnetischen Aufzeichnungsträgers erhöhen. Gleichzeitig kann mit feinteiligeren Pigmenten eine glattere Oberfläche der Magnetschicht erzielt werden und über den so verbesserten Schicht-Kopf-Abstand ein höherer Signalpegel und damit eine noch weiter gesteigerte Dynamik erreicht werden.

Ein Verfahren zur Herstellung von feinteiligem, nadelförmigem und porenfreiem $\alpha$-$Fe_2O_3$ als Vorstufe für ein daraus herzustellendes magnetisches Material mit vorteilhaften Eigenschaften wird in der DE-A 36 08 541 beschrieben. Hierbei wird ein Sn-dotiertes Eisen(III)hydroxid hergestellt, filtriert, gewaschen und anschließend eine wäßrige Suspension dieses Sn-dotierten Eisen(III)hydroxids in Gegenwart von Wachstumsregulierungsmitteln auf Temperaturen bis 250°C erhitzt. Die Wachstumsregulierungsmittel bestehen aus mit Eisen(III)-Ionen Chelatkomplexe bildenden organischen Verbindungen und verändern die Form des $\alpha$-$Fe_2O_3$-Endproduktes von der normalen Plättchenform zur Nadelform. Die Anwesenheit von Zinn-Ionen verbessert die Produktgeometrie in erwünschter Weise. Es werden Endprodukte mit wesentlich erhöhter Feinteiligkeit (kleinerer Durchmesser) unter Erhalt der Nadelform gebildet. Nachteilig an diesem Verfahren ist die Notwendigkeit, das zinndotierte Eisen(III)hydroxid abzufiltrieren, zu waschen und erneut zu suspendieren. Dieses Eisen(III)hydroxid ist jedoch ein gel-artiger Niederschlag, der sich nur sehr schlecht filtrieren und waschen läßt, so daß dieser zusätzliche Verfahrensschritt technisch sehr aufwendig ist. Versuche ohne diese Filtration und Wäsche führten aber nur zu grobteiligen Endprodukten, die für die Weiterverarbeitung und die vorgesehene Anwendung nicht geeignet waren.

Aufgabe der Erfindung war es daher, ein Verfahren zur Herstellung von feinteiligem, dendriten- und porenfreiem $\alpha$-$Fe_2O_3$ aus Eisen(III)salzen bereitzustellen, das ohne den technisch aufwendigen Schritt der Filtration und Wäsche des Eisen(III)hydroxids trotzdem feinteilige Endprodukte liefert.

Es wurde nun gefunden, daß sich das aufgabengemäß geforderte $\alpha$-$Fe_2O_3$ herstellen läßt, wenn aus einer wäßrigen Lösung eines Eisen(III)salzes in Gegenwart eines Zinn-Salzes bei 30 bis 70°C durch Zugabe von Alkali bei einem pH-Wert von 6.0 bis 8.0 Zinnhydroxid-haltiges Eisen(III)hydroxid ausgefällt, der Niederschlag bei 30 bis 70°C eine bis sechs Stunden nachgerührt und dieser Niederschlag danach in Form des resultierenden einfiltrierten wäßrigen Suspension mit einem Gehalt von weniger als 0,6 Mol Eisen(III)-hydroxid pro Liter bei einem pH-Wert von 8,5 bis 12,0 nach Zugabe einer wirksamen Menge mindestens einer mit Eisen(III)Ionen komplexbildenden Substanz auf eine Temperatur zwischen 80 und 250°C erhitzt wird.

Zur Durchführung des erfindungsgemäßen Verfahrens wurden das Eisen(III)- und das Zinnsalz aus wäßriger Lösung gemeinsam als Hydroxid ausgefällt. Als Eisen(III)salze eignen sich das Chlorid und insbesondere das Nitrat. Bei den Zinnsalzen lassen sich Zinn(II)- und auch Zinn(IV)-salze heranziehen, wobei im allgemeinen Zinn(II)- und Zinn(IV)chloride oder Stannate eingesetzt werden. Die Menge des Zinnsalzes wird zweckmäßigerweise in einer Konzentration zwischen $10^{-3}$ und $4.10^{-2}$ Mol pro Mol Eisen-(III)salz zugegeben. Die Ausfällung der Hydroxide erfolgt erfindungsgemäß bei einer Temperatur zwischen 30 und 70°C, insbesondere bei 50 bis 65°C, durch Zugabe von Alkalien, üblicherweise von Natronlauge, in einem pH-Bereich von 6,0 bis 8,0, vorteilhafterweise zwischen 6,5 und 7,5. Die Suspension des Hydroxidniederschlags wird anschließend bei 30 bis 70°C, zweckmäßigerweise bei der Temperatur der vorangegangenen Fällung zwischen 1 und 6, insbesondere 3 bis 5 Stunden nachgerührt. Das so entstandene Zinnhydroxid-haltige Eisen(III)hydroxid wird nun in der Suspension mit mindestens einer zur Komplexbildung mit Eisen(III)ionen befähigten Substanz beaufschlagt. Der Anteil des Hydroxidniederschlages der Gesamtmenge der Suspension beträgt dabei weniger als 0.6 Mol/l, da sonst die Rührfähigkeit der Suspension zu stark abnimmt und unerwünschte grobteilige Produkte erhalten werden. Bei und während der Zugabe des Komplexbildners hat der pH-Wert der Suspension 8,5 bis 12,0 zu betragen. Besonders vorteilhaft ist ein Wert zwischen 10,5 und 11,5. Als die Kristallform beeinflussende Komplexbildner werden mit Eisen(III)-Ionen Chelatkomplexe bildende Substanzen verwendet. Bevorzugt sind hierbei α-Hydroxycarbonsäuren sowie organische Phosphonsäuren. Innerhalb dieser Gruppen haben sich Citronensäure. Weinsäure und 1-Hydroxyethan-1,1-diphosphonsäure besonders bewährt. Ihre Konzentration richtet sich nach der Eisenkonzentration, dem pH-Wert und der erwünschten Endproduktgeometrie. Bevorzugter Bereich ist eine Gesamtkonzentration von $10^{-3}$ bis $10^{-2}$ Mol/l. Die Suspension wird nach dem erfindungsgemäßen Verfahren auf eine Endtemperatur zwischen 80 und 250°C, bevorzugt auf 90 bis 190°C unter Rühren aufgeheizt. Dies kann durch schnelles Aufheizen auf die Endtemperatur, schnelles Aufheizen auf einen Schwellenwert und anschließendes langsames Aufheizen auf die Endtemperatur oder langsames Aufheizen auf die Endtemperatur erfolgen. Die Wahl der Bedingungen richtet sich nach der technischen Ausführung der Kessel und den Zielvorstellungen für das Produkt. Schnelleres Aufheizen auf höhere Temperaturen bedeutet eine höhere Reaktionsgeschwindigkeit und bessere Raum-Zeit-Ausbeute aber auch höhere Energiekosten.

Nach beendeter Synthese wird das nadelförmige, feinteilige, porenfreie α-$Fe_2O_3$ filtriert, gewaschen und getrocknet. Die so erhaltenen Teilchen weisen eine spezifische Oberfläche nach BET von mehr als 18 $m^2/g$ auf. Es kann vor der weiteren Verarbeitung in an sich bekannter Weise mit einem formstabilisierenden Überzug versehen werden. Anschließend wird es in an sich bekannter Weise in einer reduzierenden Atmosphäre, z.B. in Wasserstoff und/oder mittels organischer Substanzen, die sich in Gegenwart von Eisenoxiden zersetzen, zu Magnetit reduziert, wobei in allen Fällen die gleichzeitige Anwesenheit von Wasserdampf zur Vermeidung einer Reduktion zu metallischen Phasen zweckmäßig ist. Je nach Reduktionsmittel und Dauer, die zwischen 20 Minuten und 3 Stunden liegen kann, erwiesen sich Reduktionstemperaturen zwischen 300 und 500°C als geeignet.

Der als Zwischenstufe erhaltene Magnetit läßt sich in an sich bekannter Weise mit oxidierenden Gasen, wie z.B. Sauerstoff oder Luft, bei Temperaturen zwischen 180 und 350°C oxidieren. Abhängig von der jeweiligen Oxidationstemperatur haben sich Zeiten von 10 Minuten bis 1 Stunde als zweckmäßig erwiesen. Dabei sind die Oxidationsbedingungen so zu wählen, daß die bekannte irreversible Umwandlung von γ-$Fe_2O_3$ zu α-$Fe_2O_3$ vermieden wird.

Die so erhaltenen magnetischen Materialien können je nach Anwendungszweck in bekannter Weise zur Erhöhung der Koerzitivfeldstärke an der Oberfläche mit Kobalt- oder Kobalt/Eisen(II)-Ionen modifiziert werden.

Ebenso ist es möglich, die gegebenenfalls formstabilisierten oder in bekannter Weise modifizierten Ausgangspigmente durch Erhöhung des Reduktionspotentials über die Stufe des Magnetits hinaus zu reduzieren und die so erhaltenen Metallpigmente nach geeigneter Passivierung mittels organischer Lösungsmittel oder durch vorsichtiges Überleiten von Luft direkt als Magnetpigment zu verwenden.

Mit Hilfe des erfindungsgemäßen Verfahrens ist es möglich, feinteiliges, dendriten- und porenfreies α-$Fe_2O_3$ auch ohne die bei Verfahren nach dem Stand der Technik nötigen Verfahrensschritte zu erhalten und zudem durch die Einstellung der Konzentration des Hydroxidniederschlags im Verfahrensverlauf die Feinteiligkeit des Endprodukts gezielt einzustellen.

Wesentlicher Verwendungszweck der aus den erfindungsgemäß hergestellten α-$Fe_2O_3$-Pigmenten gewonnenen Magnetpigmente stellt der Einsatz als magnetisches Material bei der Herstellung von magnetischen Aufzeichnungsträgern dar. Die Herstellung der Aufzeichnungsträger geschieht in an sich bekannter Weise. Hierzu werden die magnetischen Materialien in polymeren Bindemitteln dispergiert. Als Bindemittel eignen sich die für diesen Zweck bekannten Verbindungen, wie Homo- und Mischpolymerisate von Vinylderivaten, Polyurethanen, Polyestern und ähnliche. Die Bindemittel werden in Lösungen in geeigneten organischen Lösungsmitteln verwendet, die gegebenenfalls weitere Zusätze enthalten können. Die magnetischen Schichten werden auf starre oder biegsame Träger wie Platten, Folien und Karten aufgebracht.

Die vorliegende Erfindung wird anhand folgender Beispiele erläutert. Die angegebenen Prozentgehalte beziehen sich als Gew.% auf die Gesamtverbindung. Die magnetischen Werte der Pulverprobe wurden mit einem Schwingmagnetometer bei einem magnetischen Feld von 160 kA/m gemessen. Die Werte der Koerzitivfeldstärke, Hc, gemessen in [kA/ml], wurden bei den Pulvermessungen auf eine Stopfdichte von ρ

EP 0 331 054 B1

= 1,2 g/cm$^3$ bezogen. Die Geometrie der Produkte wurde aus elektronenmikroskopischen Aufnahmen bei einer Vergrößerung von 1:20000 entnommen. Hierbei bezeichnet Nadel eine längliche Form und nicht die Ausbildung spitzer Enden, also auch Rechtecke usw.. Die Bestimmung der spezifischen (BET-)Oberfläche ($S_{N2}$) geschieht nach DIN 66132 mittels eines Ströhlein-Areameters (Firma Ströhlein, Düsseldorf, BRD) nach dem Einpunkt-Differenz-Verfahren nach Haul und Dümbgen. Die Ergebnisse der Beispiele und Vergleichsversuche sind in einer Tabelle zusammengefaßt.

Vergleichsversuch A

5 Mol $Fe(NO_3)_3$ . 9 $H_2O$ und 0.04 Mol $SnCl_4$ (entsprechend 8 mMol Sn/Mol Fe) wurden in 15 l Wasser gelöst und bei 60°C unter Rühren mit 10%iger Natronlauge versetzt bis der pH-Wert 8.0 betrug. Die erhaltene Suspension von dotiertem Eisen(III)hydroxid (im folgenden "$Fe(OH)_3$") wurde 5 h bei 60°C nachgerührt und über eine Filterpresse filtriert. Der Niederschlag wurde einmal in kaltem Wasser resuspendiert und erneut über die Filterpresse filtriert. Die so erhaltene Fällung wurde in Wasser suspendiert, so daß sich eine "Eisenkonzentration" einstellte, die einem Gehalt von 0.60 Mol "$Fe(OH)_3$" pro Liter Suspension entsprach. Anschließend wurde die Suspension mit 0.90 mMol/l Citrat und 2.00 mMol/l 1-Hydroxyethan-1,1-diphosphonsäure versetzt und ein pH-Wert von 10.8 eingestellt. Die fertige Reaktionsmischung wurde unter Rühren 6 h bei 170°C in einem Autoklav erhitzt. Das fertige Produkt wurde filtriert und getrocknet. Es wurde röntgenreines, nadelförmiges und porenfreies $\alpha$-$Fe_2O_3$ mit einer spezifischen Oberfläche von 25.1 m$^2$/g erhalten.

Vergleichsversuch B

Es wurden 5 Mol $Fe(NO_3)_3$ . 9 $H_2O$ und 0.04 Mol $SnCl_4$ (entsprechend 8 mMol Sn/Mol Fe) wie in Vergleichsversuch A beschrieben gefällt und aufgearbeitet. Die so erhaltene Fällung wurde in Wasser suspendiert, so daß sich eine "Eisenkonzentration" einstellte, die einem Gehalt von 0.90 Mol "$Fe(OH)_3$ pro Liter Suspension entsprach. Anschließend wurde die Suspension mit 1,00 mMol/l Citrat und 2,90 mMol/l 1-Hydroxyethan-1,1-diphosphonsäure versetzt und ein pH-Wert von 10,8 eingestellt. Die fertige Reaktionsmischung wurde unter Rühren 6 h bei 170°C in einem Autoklav erhitzt. Das fertige Produkt wurde filtriert und getrocknet. Es wurde ebenfalls röntgenreines, nadelförmiges und porenfreies $\alpha$-$Fe_2O_3$ mit einer spezifischen Oberfläche von 25.1 m$^2$/g erhalten.

Vergleichsversuch C

Es wurden 5 Mol $Fe(NO_3)_3$ . 9 $H_2O$ und 0.04 Mol $SnCl_4$ (entsprechend 8 mMol Sn/Mol Fe) wie in Vergleichsversuch A beschrieben, gefällt (Fällung bei 50°C) und aufgearbeitet. Die so erhaltene Fällung wurde in Wasser suspendiert, so daß sich eine "Eisenkonzentration" einstellte, die einem Gehalt von 0,45 Mol "$Fe(OH)_3$" pro Liter Suspension entsprach. Anschließend wurde die Suspension mit 0,90 mMol/l Citrat und 1,70 mMol/l 1-Hydroxyethan-1,1-diphosphonsäure versetzt und ein pH-Wert von 10,8 eingestellt. Die fertige Reaktionsmischung wurde unter Rühren innerhalb von 10 h auf 170°C in einem Autoklav erhitzt. Das fertige Produkt wurde filtriert und getrocknet. Es wurde ebenfalls röntgenreines, nadelförmiges und porenfreies $\alpha$-$Fe_2O_3$ mit einer spezifischen Oberfläche von 26,0 m$^2$/g erhalten.

Vergleichsversuch D

Es wurden 5 Mol $Fe(NO_3)_3$ . 9 $H_2O$ und 0.04 Mol $SnCl_4$ (entsprechend 8 mMol Sn/Mol Fe), wie in Vergleichsversuch A beschrieben, gefällt und aufgearbeitet. Die so erhaltene Fällung wurde in einer mit Kunststoff ausgekleideten Glasapparatur in Wasser suspendiert, so daß sich eine "Eisenkonzentration" einstellte, die einem Gehalt von 1.35 Mol "$Fe(OH)_3$" pro Liter Suspension entsprach. Anschließend wurde die Suspension mit 0.90 mMol/l Weinsäure und 3.20 mMol/l Citrat versetzt und ein pH-Wert von 11,3 eingestellt. Die fertige Reaktionsmischung wurde unter Rühren innerhalb von 2 h auf 100°C und anschließend für weitere 30 h bei 100°C erhitzt. Das fertige Produkt wurde filtriert und getrocknet. Es wurde ebenfalls röntgenreines, nadelförmiges und porenfreies $\alpha$-$Fe_2O_3$ mit einer spezifischen Oberfläche von 26,1 m$^2$/g erhalten.

4

Vergleichsversuch E

In einer mit Kunststoff ausgekleideten Glasapparatur wurden 0.36 Mol $Fe(NO_3)_3$ . 9 $H_2O$ und 2,93 mMol $SnCl_4$ . 5 $H_2O$ entsprechend 8,15 mMol Sn/Mol Fe) in 0,6 l $H_2O$ gelöst und bei 60°C und einem pH-Wert von 8,0 als Hydroxid gefällt. Die so erhaltene Fällung wurde 4 h bei 60°C gerührt, mit 0,90 mMol/l Weinsäure und 3,20 mMol/l Citrat versetzt und ein pH-Wert von 10,8 eingestellt. Anschließend wurde unter Rühren innerhalb von 1 h auf 100°C und anschließend für weitere 15 h bei 100°C erhitzt. Das fertige Produkt wurde filtriert und getrocknet. Es wurde röntgenreines, nadelförmiges und porenfreies $\alpha$-$Fe_2O_3$ mit einer spezifischen Oberfläche von 13,4 $m^2$/g erhalten.

Vergleichsversuch F

In einer mit Kunststoff ausgekleideten Glasapparatur wurden 0.36 Mol $Fe(NO_3)_3$ . 9 H in 0,6 l $H_2O$ gelöst und bei 60°C und einem pH-Wert von 8,0 als Hydroxid gefällt. Die so erhaltene Fällung wurde 4 h bei 60°C gerührt, mit 0,90 mMol/l Weinsäure und 3.20 mMol/l Citrat versetzt und ein pH-Wert von 10.8 eingestellt. Anschließend wurde unter Rühren innerhalb von 1 h auf 100°C und anschließend für weitere 20 h bei 100°C erhitzt. Das fertige Produkt wurde filtriert und getrocknet. Es wurde röntgenreines, nadelförmiges und porenfreies $\alpha$-$Fe_2O_3$ mit einer spezifischen Oberfläche von 8,1 $m^2$/g erhalten.

Beispiel 1

In einer mit Kunststoff ausgekleideten Glasapparatur wurden 0,15 Mol $Fe(NO_3)_3$ . 9 $H_2O$ und 2,4 mMol $SnCl_4$ . 5 $H_2O$ (entsprechend 16.0 mMol Sn/Mol Fe) in 0,6 l $H_2O$ gelöst und bei 60°C und einem pH-Wert von 8,0 als Hydroxid gefällt. Die so erhaltene Fällung wurde 4 h bei 60°C gerührt, mit 0,90 mMol/l Weinsäure und 3,10 mMol/l Citrat versetzt und ein pH-Wert von 10,8 eingestellt. Anschließend wurde unter Rühren innerhalb von 1 h auf 100°C und anschließend für weitere 20 h bei 100°C erhitzt. Das fertige Produkt wurde filtriert und getrocknet. Es wurde röntgenreines, nadelförmiges und porenfreies $\alpha$-$Fe_2O_3$ mit einer spezifischen Oberfläche von 36,9 $m^2$/g erhalten.

Beispiel 2

In einer mit Kunststoff ausgekleideten Glasapparatur wurden 0.21 Mol $Fe(NO_3)_3$ . 9 $H_2O$ und 3,6 mMol $SnCl_4$ . 5 $H_2O$ (entsprechend 17.1 mMol Sn/Mol Fe) in 0,6 l $H_2O$ gelöst und bei 60°C und einem pH-Wert von 8,0 als Hydroxid gefällt. Die so erhaltene Fällung wurde 4 h bei 60°C gerührt, mit 0,90 mMol/l Weinsäure und 2,70 mMol/l Citrat versetzt und ein pH-Wert von 10,8 eingestellt. Anschließend wurde unter Rühren innerhalb von 1 h auf 100°C und anschließend für weitere 20 h bei 100°C erhitzt. Das fertige Produkt wurde filtriert und getrocknet. Es wurde röntgenreines, nadelförmiges und porenfreies $\alpha$-$Fe_2O_3$ mit einer spezifischen Oberfläche von 32.3 $m^2$/g erhalten.

Beispiel 3

In einer mit Kunststoff ausgekleideten Glasapparatur wurden 0,21 Mol $Fe(NO_3)_3$ . 9 $H_2O$ und 2,4 mMol $SnCl_4$ . 5 $H_2O$ (entsprechend 11.4 mMol Sn/Mol Fe) in 0,6 l $H_2O$ gelöst und bei 60°C und einem pH-Wert von 8,0 als Hydroxid gefällt. Die so erhaltene Fällung wurde 4 h bei 60°C gerührt, mit 0,90 mMol/l Weinsäure und 3,20 mMol/l Citrat versetzt und ein pH-Wert von 10,8 eingestellt. Anschließend wurde unter Rühren innerhalb von 1 h auf 100°C und anschließend für weitere 20 h bei 100°C erhitzt. Das fertige Produkt wurde filtriert und getrocknet. Es wurde röntgenreines, nadelförmiges und porenfreies $\alpha$-$Fe_2O_3$ mit einer spezifischen Oberfläche von 27,2 $m^2$/g erhalten.

Beispiel 4

In einer mit Kunststoff ausgekleideten Glasapparatur wurden 0,21 Mol $Fe(NO_3)_3$ . 9 $H_2O$ und 1,2 mMol $SnCl_4$ . 5 $H_2O$ (entsprechend 5,7 mMol Sn/Mol Fe) in 0.6 l $H_2O$ gelöst und bei 60°C und einem pH-Wert von 8.0 als Hydroxid gefällt. Die so erhaltene Fällung wurde 4 h bei 60°C gerührt, mit 1.20 mMol/l Weinsäure und 3,70 mMol/l Citrat versetzt und ein pH-Wert von 11.3 eingestellt. Anschließend wurde unter Rühren innerhalb von 1 h auf 100°C und anschließend für weitere 20 h bei 100°C erhitzt. Das fertige Produkt wurde filtriert und getrocknet. Es wurde röntgenreines, nadelförmiges und porenfreies $\alpha$-$Fe_2O_3$ mit einer spezifischen Oberfläche von 23.2 $m^2$/g erhalten.

Beispiel 5

In einer mit Kunststoff ausgekleideten Glasapparatur wurden 0,21 Mol $Fe(NO_3)_3 \cdot 9\ H_2O$ und 6,0 mMol $SnCl_4 \cdot 5\ H_2O$ (entsprechend 28.6 mMol Sn/Mol Fe) in 0,6 l $H_2O$ gelöst und bei 60°C und einem pH-Wert von 8,0 als Hydroxid gefällt. Die so erhaltene Fällung wurde 3 h bei 60°C gerührt, mit 0,90 mMol/l Weinsäure und 2,70 mMol/l Citrat versetzt und ein pH-Wert von 10,8 eingestellt. Anschließend wurde unter Rühren innerhalb von 1 h auf 100°C und anschließend für weitere 10 h bei 100°C erhitzt. Das fertige Produkt wurde filtriert und getrocknet. Es wurde röntgenreines. nadelförmiges und porenfreies $\alpha\text{-}Fe_2O_3$ mit einer spezifischen Oberfläche von 23.0 $m^2/g$ erhalten.

Beispiel 6

In einer mit Kunststoff ausgekleideten Glasapparatur wurden 0,27 Mol $Fe(NO_3)_3 \cdot 9\ H_2O$ und 4,8 mMol $SnCl_4 \cdot 5\ H_2O$ (entsprechend 17,8 mMol Sn/Mol Fe) in 0,6 l $H_2O$ gelöst und bei 60°C und einem pH-Wert von 8,0 als Hydroxid gefällt. Die so erhaltene Fällung wurde 4 h bei 60°C gerührt, mit 0,90 mMol/l Weinsäure und 2,80 mMol/l Citrat versetzt und ein pH-Wert 10,8 eingestellt. Anschließend wurde unter Rühren innerhalb von 1 h auf 100°C und anschließend für weitere 20 h bei 100°C erhitzt. Das fertige Produkt wurde filtriert und getrocknet. Es wurde röntgenreines, nadelförmiges und porenfreies $\alpha\text{-}Fe_2O_3$ mit einer spezifischen Oberfläche von 18,7 $m^2/g$ erhalten.

Beispiel 7

In einer mit Kunststoff ausgekleideten Glasapparatur wurden 0,21 Mol $Fe(NO_3)_3 \cdot 9\ H_2O$ und 2,4 mMol $SnCl_2$ (entsprechend 11,4 mMol Sn/Mol Fe) in 0,6 l $H_2O$ gelöst und bei 60°C und einem pH-Wert von 8,0 als Hydroxid gefällt. Die so erhaltene Fällung wurde 3,5 h bei 60°C gerührt, mit 0,90 mMol/l Weinsäure und 3,40 mMol/l Citrat versetzt und ein pH-Wert von 10,8 eingestellt. Anschließend wurde unter Rühren innerhalb von 1 h auf 100°C und anschließend für weitere 20 h bei 100°C erhitzt. Das fertige Produkt wurde filtriert und getrocknet. Es wurde röntgenreines, nadelförmiges und porenfreies $\alpha\text{-}Fe_2O_3$ mit einer spezifischen Oberfläche von 27,0 $m^2/g$ erhalten.

Beispiel 8

In einer mit Kunststoff ausgekleideten Glasapparatur wurden 0,21 Mol $Fe(NO_3)_3 \cdot 9\ H_2O$ und 6,0 mMol $SnCl_2$ (entsprechend 11,4 mMol Sn/Mol Fe) in 0,6 l $H_2O$ gelöst und bei 60°C und einem pH-Wert von 8,0 als Hydroxid gefällt. Die so erhaltene Fällung wurde 5 h bei 60°C gerührt, mit 0,90 mMol/l Weinsäure und 3,40 mMol/l Citrat versetzt und ein pH-Wert von 10,8 eingestellt. Anschließend wurde unter Rühren innerhalb von 1 h auf 100°C und anschließend für weitere 20 h bei 100°C erhitzt. Das fertige Produkt wurde filtriert und getrocknet. Es wurde röntgenreines, nadelförmiges und porenfreies $\alpha\text{-}Fe_2O_3$ mit einer spezifischen Oberfläche von 31,5 $m^2/g$ erhalten.

Beispiel 9a

1,75 Mol $Fe(NO_3)_3 \cdot 9\ H_2O$ und 0,02 mMol $K_2SnO_3 \cdot 3\ H_2O$ (entsprechend 11,4 mMol Sn/Mol Fe) wurden in 5,0 l $H_2O$ gelöst und bei 60°C und einem pH-Wert von 8,0 als Hydroxid gefällt. Die so erhaltene Fällung wurde 5 h bei 60°C gerührt, mit 0,90 mMol/l Citrat und 1,50 mMol/l 1-Hydroxyethan-1,1-diposphonsäure versetzt und ein pH-Wert von 10,8 eingestellt. Anschließend wurde unter Rühren in einem Autoklav 6 h bei 170°C erhitzt. Das fertige Produkt wurde filtriert und getrocknet. Es wurde röntgenreines, nadelförmiges und porenfreies $\alpha\text{-}Fe_2O_3$ mit einer spezifischen Oberfläche von 20,2 $m^2/g$ erhalten.

Beispiel 9b

0,025 Mol $Fe(NO_3)_3 \cdot 9\ H_2O$ und 0,4 mMol $SnCl_4 \cdot 5\ H_2O$ (entsprechend 11,4 mMol Sn/Mol Fe) wurden in 0,1 l $H_2O$ gelöst und bei 60°C und einem pH-Wert von 8,0 als Hydroxid gefällt. Die so erhaltene Fällung wurde 5 h bei 60°C gerührt, mit 0,90 mMol/l Citrat und 1,50 mMol/l 1-Hydroxyethan-1,1-diposphonsäure versetzt und ein pH-Wert von 10,8 eingestellt. Anschließend wurde unter Rühren in einem Autoklav 6 h bei 170°C erhitzt. Das fertige Produkt wurde filtriert und getrocknet. Es wurde röntgenreines, nadelförmiges und porenfreies $\alpha\text{-}Fe_2O_3$ mit einer spezifischen Oberfläche von 21,8 $m^2/g$ erhalten.

6

Beispiel 10

80 g des Produktes aus Beispiel 7 wurden mit 0,6 % $PO_4$ in bekannter Weise formstabilisierend ausgerüstet, mit 2,5 % Stearinsäure versetzt und in einem Drehrohrofen 30 Minuten bei 450°C in einem Wasserstoffvolumenstrom von 50 Nl/h verdünnt mit einem Stickstoffvolumenstrom von 50 nL/h zu Magnetit reduziert. Vor dem Eintritt in das Reduktionsrohr wurde der $H_2$-Strom durch Wasser mit einer Temperatur von 40°C hindurchgeleitet. Nach beendeter Reduktion wurde die Magnetitprobe in einem Ofen gleicher Bauart 30 Minuten bei 280°C mit Luft zu $\gamma$-$Fe_2O_3$ oxidiert. Das fertige Produkt hatte eine Koerzitivfeldstärke von 28,7 kA/m.

Tabelle

| Vergl. Vers. | Fe-Konz. | Sn-Dot. | Temper-dauer | We-Konz. | Ci-Konz. | Ph-Konz. | Temperatur-führung | SN₂ |
|---|---|---|---|---|---|---|---|---|
| A | 0,6 | 8,0 | 5 | | 0,9 | 2,0 | 6 h 170°C | 25,1 |
| B | 0,9 | 8,0 | 5 | | 1,0 | 2,9 | 6 h 170°C | 25,1 |
| C | 0,45 | 8,0 | 5 | | 0,9 | 1,7 | 10 h 100°C | 26,0 |
| D | 1,35 | 8,0 | 4 | 0,9 | 3,2 | | 30 h 100°C | 26,1 |
| E | 0,6 | 8,15 | 4 | 0,9 | 3,2 | | 15 h 100°C | 13,4 |
| F | 0,6 | 0 | 4 | 0,9 | 3,2 | | 20 h 100°C | 8,1 |
| 1 | 0,25 | 16,0 | 4 | 0,9 | 3,1 | | 20 h 100°C | 36,9 |
| 2 | 0,35 | 17,1 | 4 | 0,9 | 2,7 | | 20 h 100°C | 32,3 |
| 3 | 0,35 | 11,4 | 4 | 0,9 | 3,2 | | 20 h 100°C | 27,2 |
| 4 | 0,35 | 5,7 | 4 | 1,2 | 3,7 | | 20 h 100°C | 23,2 |
| 5 | 0,35 | 28,6 | 3 | 0,9 | 2,7 | | 10 h 100°C | 23,0 |
| 6 | 0,45 | 17,8 | 4 | 0,9 | 2,8 | | 20 h 100°C | 18,7 |
| 7 | 0,35 | 11,4 | 3,5 | 0,9 | 3,4 | | 20 h 100°C | 27,0 |
| 8 | 0,35 | 11,4 | 5 | 0,9 | 3,4 | | 20 h 100°C | 31,5 |
| 9a | 0,35 | 11,4 | 5 | | 0,9 | 1,5 | 6 h 170°C | 20,2 |
| 9b | 0,35 | 11,4 | 5 | | 0,9 | 1,4 | 6 h 170°C | 21,8 |

Erläuterungen:

Fe-Konz.:     Eisen-Konzentration in Mol/l

Sn-Dot.:      Zinn-Dotierung in mMol Sn/Mol Fe

Temperdauer:    Dauer der Nachrührzeit bei 60°C nach der Fällung als Eisen(III)hydroxid in h

We-Konz.:     Weinsäure-Konzentration in mMol/l

Ci-Konz.:     Citrat-Konzentration in mMol/l

Ph-Konz.:     1-Hydroxyethan-1,1-diphosphonsäure-Konzentration in mMol/l

Temperaturführung:   Dauer und Temperatur während der Synthese nach der Zugabe der Komplexbildner

SN₂:        spezifische Oberfläche in m²/g

**Patentansprüche**

1. Verfahren zur Herstellung von feinteiligem, dendriten- und porenfreiem $\alpha$-Fe$_2$O$_3$ aus Eisen(III)-Salzen in Gegenwart von mit Eisen(III)-Ionen komplexbildenden Substanzen in alkalischer Suspension bei Temperaturen zwischen 80 und 250°C, dadurch gekennzeichnet, daß aus einer wäßrigen Lösung eines Eisen-(III)salzes in Gegenwart eines Zinn-Salzes bei 30 bis 70°C durch Zugabe von Alkali bei einem pH-Wert von 6,0 bis 8,0 Zinnhydroxid-haltiges Eisen(III)hydroxid gefällt, der Niederschlag bei 30 bis 70°C eine bis sechs Stunden nachgerührt und dieser Niederschlag danach in Form des resultierenden unfiltrierten wäßrigen Suspension mit einem Gehalt von weniger als 0,6 Mol Eisen(III)hydroxid pro Liter bei einem pH-Wert von 8,5 bis 12,0 nach Zugabe einer wirksamen Menge mindestens einer mit Eisen(III)ionen komplexbildenden Substanz auf eine Temperatur zwischen 80 und 250°C erhitzt wird.

2. Verfahren nach Anspruch 1, dadurch gekennzeichnet, daß das Zinnsalz in einer Konzentration von $10^{-3}$ bis $4 \times 10^{-2}$ Mol pro Mol Eisen(III)-Salz eingesetzt wird.

3. Verfahren nach Anspruch 1, dadurch gekennzeichnet, daß der Komplexbildner eine organische, mit Eisen(III)-Ionen Chelatkomplexe bildende Verbindung ist.

4. Verfahren nach Anspruch 3, dadurch gekennzeichnet, daß der Komplexbildner eine $\alpha$-Hydroxycarbon-säure und/oder eine organische Phosphonsäure in einer Konzentration von $10^{-2}$ bis $10^{-3}$ Mol je Liter Suspension ist.

**Claims**

1. A process for the preparation of finely divided, dendrite-free and pore-free $\alpha$-Fe$_2$O$_3$ from an iron (III) salt in the presence of a substance which forms complexes with iron(III) ions, in alkaline suspension at from 80 to 250°C, wherein tin hydroxide-containing iron(III) hydroxide is precipitated, at a pH of from 6.0 to 8.0, from an aqueous solution of an iron(III) salt in the presence of a tin salt at from 30 to 70°C by adding an alkali, the precipitate is stirred for from one to six hours at from 30 to 70°C, and this precipitate, in the form of the resulting unfiltered aqueous suspension containing less than 0.6 mole of iron(III) hydroxide per liter, is then heated to 80-250°C at a pH of from 8.5 to 12.0, after the addition of an effective amount of one or more substances which form a complex with iron(III) ions.

2. A process as claimed in claim 1, wherein the tin salt is used in a concentration of $10^{-3}$ to $4 \times 10^{-2}$ mole per mole of iron(III) salt.

3. A process as claimed in claim 1, wherein the complex former is an organic compound which forms chelate complexes with iron(III) ions.

4. A process as claimed in claim 3, wherein the complex former is an $\alpha$-hydroxycarboxylic acid and/or an organic phosphonic acid in a concentration of from $10^{-2}$ to $10^{-3}$ mole per liter of suspension.

**Revendications**

1. Procédé de préparation de $\alpha$-Fe$_2$O$_3$ finement divisé, exempt de dendrites et de pores, à partir de sel de fer (III), en présence de substances formant des complexes à ions fer (III), en suspension alcaline, à des températures comprises entre 80 et 250°C, caractérisé par le fait qu'à partir d'une solution aqueuse d'un sel de fer (III), en présence d'un sel d'étain, à 30 à 70°C, par addition d'alcali à un pH de 6,0 à 8,0, on précipite de l'hydroxyde de fer (III) à teneur en hydroxyde d'étain, on agite le précipité pendant une à six heures à 30 à 70°C et ensuite on chauffe à une température comprise entre 80 et 250°C ce précipité alors en forme de la suspension aqueuse infiltrée résultante d'une teneur inférieure à 0,6 mol d'hydroxyde de fer (III) par litre, à un pH de 8,5 à 12,0, après addition d'une quantité efficace d'au moins une substance complexante à ions fer (III).

2. Procédé selon la revendication 1, caractérisé par le fait que le sel d'étain est ajouté à une concentration de $10^{-3}$ à $4 \times 10^{-2}$ mol par mole de sel de fer (III).

3. Procédé selon la revendication 1, caractérisé par le fait que le complexant est un composé organique formant des complexes chelatés à ions fer (III).

4. Procédé selon la revendication 1, caractérisé par le fait que le complexant est un acide $\alpha$-hydroxycar-boxylique et/ou un acide phosphonique organique en une concentration de $10^{-2}$ à $10^{-3}$ mol par litre de

suspension.